# EUROPÄISCHE PATENTSCHRIFT

(11) **EP 2 138 303 B1**
(45) Veröffentlichungstag und Bekanntmachung des Hinweises auf die Patenterteilung: **14.01.2015**
(21) Anmeldenummer: 09163693.6
(22) Anmeldetag: 25.06.2009
(51) Int. Cl.: B32B 37/04, B32B 37/18, B29C 65/02, B29C 65/44

(54) **Verfahren zum Verbinden zweier Kunststoffplatten**
Method for connecting two plastic plates
Procédé de raccordement de deux plaques en plastique

(30) Priorität: 27.06.2008 DE 102008030152
(43) Veröffentlichungstag der Anmeldung: 30.12.2009
(73) Patentinhaber: Pact Technologies Switzerland AG, 8634 Hombrechtikon (CH)
(72) Erfinder: Fritz, Matthias, 6162, Mutters (AT)
(74) Vertreter: Puchberger, Peter

(56) Entgegenhaltungen:
- JP-A- 2004 113 617
- US-A1- 2006 147 655

## Beschreibung

Die Erfindung betrifft ein Verfahren zum Verwalzen und Verbinden von Dunststoffplatten.

Ein gattungsgemäßes Verfahren zum Verbinden zweier Kunststoffplatten aus Polyrnethylmetacrylat (im Folgenden PMMA), Acrylkunststoff- oder Plexiglas ist aus der DE 44 39 419 Al bekannt. Hier wird vorgeschlagen, zwei Kunststoffplatten oberflächlich auf Temperaturen zwischen 130° C und 200° C zu erhitzen und sie dann zwischen einem Walzenpaar zu verpressen. Die Temperatur im Kern der Kunststoffplatten wird dabei stets unterhalb der sog. Vicat-Erweichungstemperatur VIT des PMMA-Kunststoffes gehaften. Je nach PMMA-Kunststoffart bzw. dessen mittlerem Molgewicht kann diese charakteristische Temperatur durchaus variieren. Zwischen den in der oben beschriebenen Weise erhitzten Kunststoffplatten können flächige Gegenstände wie Bilder oder Folien, oder längliche Gegenstände wie Fäden, Drähte oder dünne Bahnen anderer Kunststoffe vor dem Verwalzen zwischen die Kunststoffplatten eingelegt werden und durch Verpressen zwischen den Kunststoffplatten eingelagert werden.

Des Weiteren sind Verfahren zur Herstellung von Acrylglasblöcken mit eingegossenen Objekten in einer Form bekannt, beispielsweise aus DE 202 04 614 U1. Derartige Verfahren haben zum Nachteil, dass die Objekte nur mit Aufwand fixiert werden können.

Aus der US 2006/147656 A1, ist ein Verfahren zum Verpressen und Verbinden zumindest zweier Kunststoffplatten bekannt, wobei die Kunststoffplatten jeweils eine Fügeseite und eine Pressseite aufweisen. Das bekannte Verfahren hat die Verfahrensschritte:
a) Auflegen von Objekten, bei denen das Verhältnis der Höhe zu deren Breite und/oder Länge größer als 30% ist, wobei die Höhe der Objekte an einer zur Fügeseite der Kunststoffplatten orthogonalen Achse gemessen ist, auf die Fügeseite einer Kunststoffplatte;
b) Erhitzen zweier Kunststoffplatten auf der Fügeseite
c) Verwalzen der zwei Kunststoffplatten in ein Press, wobei die Kunststoffplatten einander mit ihren Fügeseiten zugewandt angeordnet sind, bis die Objekte von Kunststoff umschlossen sind.

Ein weiteres gattungsgemäßes Verfahren aus dem Stand der Technik ist in der JP 2004 113617 A beschrieben.

Problematisch an den vorbekannfien Vorgehensweisen ist, dass Objekte, bei denen das Verhältnis der Höhe zur Länge bzw. zur Breite mehr als 30% beträgt, wie zum Beispiel kugel- oder kegelartige Objekte, nicht oder nur aufwendig in einer definierten Ebene zwischen zwei Kunststoffplatten eingegossen werden können. Bei der Eingießtechnik würden die Objekte innerhalb des flüssigen Kunststoffes zu Boden sinken oder aufschwimmen, je nachdem, wie groß ihre Dichte ist. Der Kunststoff kann beim Erhärten nicht aktiv gegen die Objekte gedrückt werden und diese umschließen. Dadurch können sich leicht Gaseinschlüsse an den Objekten bilden.

Aurgabe der vorliegenden Erfindung ist es, ein Verfahren zum Einwalzen von Objekten, bei denen das Verhältnis der Höhe zur Länge bzw. zur Breite größer als 30% ist, innerhalb zweier Kunststoffplatten vorzusehen, wobei in der entstehenden Kunststoffplatte die Objekte in einer definierten Ebene angeordnet sein sollen und sich an den Rändern der Objekte keine Gaseinschlüsse bilden.

Gelöst wird diese Aufgabe mit einem Verfahren zum Verwalzen und Verbinden zumindest zweier Kunststoffplatten, die jeweils eine Fügeseite und eine Walzseite aufweisen, an ihren Fügeseiten, mit den Verfahrensschritten:
a) Auflegen von Objekten, bei denen das Verhältnis der Höhe zu deren Breite und/oder Länge größer als 30% ist, wobei die Höhe der Objekte an einer zur Fügeseite der Kunststoffplatten orthogonalen Achse gemessen ist, auf die Fügeseite einer Kunststoffplatte,
b) separates Erhitzen zweier Kunststoffplatten auf der Fügeseite, wobei
   - an einer oberflächlichen, äußersten Grenzschicht eine Temperatur T_{erw2} erreicht wird, bei der die Viskosität des Kunststoffes zwischen 10 000 Pa*s und 200 000 Pa*s liegt,
   - und in einer Innenschicht, welche in einer Tiefe der Kunststoffplatten liegt, die zu 40% der Höhe der Objekte entspricht, eine Temperatur T_{erw1} erreicht wird, bei der die Viskosität des Kunststoffes zwischen 200 000 Pa*s und 1 000 000 Pa*s liegt, und
   wobei die Walzseiten auf einer Temperatur T₂ gehalten werden, die mindestens 10K unterhalb T_{erw1} liegt,
c) Verwalzen der zwei Kunststoffplatten zwischen zwei Walzen, wobei die Kunststoffplatten einander mit ihren Fügeseiten zugewandt angeordnet sind und wobei die Kunststoffplatten so angewinkelt zugeführt werden, dass so lange ein Spalt zwischen den Objekten und der offenen Seite einer Zuführseite erhalten bleibt, bis die Objekte von Kunststoff umschlossen sind.

Mit dem oben genannten Verfahren können nun Objekte, bei denen das Verhältnis der Höhe zur Länge bzw. zur Breite größer als 30% ist, in einer definierten Ebene in einer PMMA-Kunststoffplatte angeordnet werden, wobei die Lage der Ebene über das Materialstärkenverhältnis der zuvor eingelegten Kunststoffplatten eingestellt werden kann. Vorteilhaft wird der Kunststoff PMMA eingesetzt, dieser ist mehrfach reversibel schmelzbar. Denkbar sind jedoch auch andere schmelzbare Kunststoffe, insbesondere amorphe Thermoplasten. Die Ebene liegt dort, wo vor dem Verbinden die Fügeseiten der Kunststoffplatten waren, die nach dem Verwalzen in der Ebene in dem Kunststoffprodukt verschmolzen sind. Die der Fügeseite abgewandte Seite der Kunststoffplatten ist die Walzseite, die im Verwalzschritt als mechanische Brücke verwendet wird, um den Anpressdruck der Walzen auf die einander zugewandten Fügeseiten und die zu verwalzenden Objekte zu übertragen. So wird hier ein Druck aufgebaut, der bewirkt, dass der viskose Kunststoff die Objekte allseitig umschließt. Dazu wird die Walzseite während des Erhitzens nicht mit aufgeschmolzen, sondern auf einer geringeren Temperatur gehalten. Dazu wird die Walzseite vorteilhaft mit einer Oberfläche in Kontakt gebracht, deren Temperatur 300 K bis 600 K unterhalb der Temperatur eines Heizkörpers liegt. Vorteilhaft liegt die Temperatur der Oberfläche, mit der die Walzseite der Kunststoffplatten in Kontakt ist, zwischen 150 K und 250 K unterhalb der Temperatur, auf welche die Fügeseite der Kunststoffplatten erhitzt wird.

Die Temperatur wird so gewählt, dass der Kunststoff die Objekte vollständig umschließen kann. Die Fügeseite wird so lange erhitzt, bis die Temperatur bis zu einer Tiefe, die bis zu 80% so groß sein sollte wie die spätere Eindringtiefe eines Objektes, die Temperatur T_{erw1} erreicht hat. Die Eindringtiefe ist dabei etwa halb so groß wie die Höhe eines Objektes. An einer äußeren Grenzschicht ist die Temperatur größer und wird im Folgenden als T_{erw2} bezeichnet. Bei Temperatur T_{erw2} weist der Kunststoff eine niedrigere Viskosität als bei T_{erw1}, er ist hier weniger zäh. Je nach verwendeter Kunststoffart liegt T_{erw1} zwischen 100°C und 200°C und T_{erw2} zwischen 150°C und 300°C. Einige Kunststoffe werden ab einer gewissen Temperatur so niedrigviskos, dass sie schnell beginnen zu tropfen. Dies sollte verhindert werden, da in diesem Fall die Kunststoffplatten nicht mit einander zugewandten Fügeseiten den Walzen zugeführt werden können, ohne dass Kunststoff von der oberen auf die untere Kunststoffplatte tropft.

Es hat sich auch gezeigt, dass ab einer gewissen, von der Kunststoffart und Kunststoffherstellungsart abhängigen Temperatur Blasen entstehen. Bei dieser Temperatur setzt die Depolymerisation verstärkt ein. Das Polymer zersetzt sich wieder in seine Bestandteile. Die entstehenden Monomere sieden sofort und bilden Gasblasen. Diese Temperatur kann bei höheren Drücken um nochmals 50K bis 70K überschritten werden. Bei der Verwalztechnik wird jedoch mit Ausnahme des Bereiches, der sich zwischen den Walzen befindet, bei Atmosphärendruck gearbeitet. Hier kann jedoch die Temperatur nicht mehr an der geforderten Stelle Einfluss genommen werden. Bei vielen PMMA-Arten liegt die hier beschriebene kritische Temperatur bei Atmosphärendruck zwischen 220°C und 280° C.

Als einzubettende Objekte kommen solche Objekte in Frage, die orthogonal zur Fügefläche eine geringere Höhe aufweisen als die nach dem Verwalzen noch vorhandene Dicke der zusammengefügten Kunststoffplatten. Der Abstand eines Objektes von der Außenkontur des Kunststoffprodukts ist bevorzugt mindestens 5% so groß wie die Höhe des Kunststoffprodukts. Es können Kaffeebohnen, Kugeln von Kugellagern und besonders bevorzugt so genannte Strasssteine werden. Es handelt sich hierbei um Glas-Steine, die nach einem so genannten Brilliantschliff bearbeitet worden sind. Es wird dabei bevorzugt ein Kristallglas verwendet, welches einen sehr hohen Bleianteil hat und somit einen sehr hohen Brechungsindex. Dieser bewirkt mit den angeschliffenen Flächen bei einer Drehung der Strasssteine relativ zum Auge des Betrachters bei Lichteinfall infolge häufiger Reflexionen innerhalb des Strasssteins eine funkelnde Wirkung. Der Brechungsindex von Kristallglas liegt bei sichtbarem Licht zwischen 1,9 und 2,2. Der Brechungsindex von durchsichtigem Kunststoff liegt hingegen bei sichtbarem Licht zwischen 1,4 bis 1,7. Beispielsweise hat PMMA einen Brechungsindex von ca. 1,49. Bettet man nun gemäß dem erfindungsgemäßen Verfahren in durchsichtigem Kunststoff ein, so entsteht eine ganz eigentümliche Erscheinung. Die Strasssteine sind deutlich wahrnehmbar, weil ihr Material einen höheren Brechungsindex aufweist als PMMA. Sie scheinen im Kunststoff zu schweben.

Vorteilhaft werden die Strasssteine in den Platten so angeordnet, dass ihre durch die Spitze gehenden Zentralachsen orthogonal zu der definierten Ebene innerhalb der Kunststoffplatten liegen. Von oben oder von unten betrachtet weisen die Glasobjekte eine polygone Außenkontur auf.

Es muss darauf geachtet werden, dass das Erhitzen nur auf der Fügeseite erfolgt, auf welche die zu verwalzenden Objekte eingelegt werden, damit die Kunststoffplatten noch handhabbar sind und nicht ihre Form verlieren. Deshalb liegen die Kunststoffplatten vorteilhaft während des Erhitzens auf einer Unterlage, zum Beispiel einer Schublade aus einem festen, hitzebeständigen Material, vorzugsweise Metall. Die Schublade weist vorteilhaft eine im Wesentlichen flache Oberfläche auf und ist geeignet, die Temperatur der Kunststoffplatte auf der der Fügeseite abgewandten Seite, der Walzseite gering zu halten. Beispielsweise kommt hier ein verhältnismäßig dickes Blech in Frage, welches einen guten Wärmeübertragungsindex hat und somit viel Wärme von der Walzseite der Kunststoffplatte in sich aufnimmt und die Kunststoffplatte auf der Walzseite "kühlt". Die Temperatur auf der Walzseite liegt vorteilhaft nach dem Verwalzen bei 20°C bis 95°C.

Gemäß einer vorteilhaften Weiterbildung der Erfindung kann eine Schublade auch aktiv mit einer Wärmeübertragungsflüssigkeit gekühlt werden. Hierzu können innerhalb der Schublade Leitungen für die Wärmeübertragungsflüssigkeit vorgesehen werden. Über eine Zuleitung wird der Schublade kühle Wärmeübertragungsflüssigkeit zugeführt, an einem Ablauf wird diese abgeführt. Vorzugsweise wird als Wärmeübertragungsflüssigkeit Wasser verwendet.

Auf diese Art kann gewährleistet werden, dass auch verhältnismäßig dünne Kunststoffplatten, darunter werden Kunststoffplatten von unter 20 mm oder gar 10 mm Materialstärke verstanden, auf der Fügeseite erhitzt werden können, ohne dass die Hitze die Kunststoffplatte bis zur Walzseite durchdringt. Die Kunststoffplatten können so nach dem Erhitzen in einem Stück aus dem Ofen entnommen werden, sie verbiegen sich allenfalls geringfügig.

Der verhältnismäßig geringe Wärmeübertragungskoeffizient von 0,3 bis 0,5 W/m²K von Kunststoff sorgt dafür, dass sich die Temperaturverteilung in der Kunststoffplatte nicht schnell homogenisiert. Zumindest im bodennahen Bereich, in dem der Kunststoff mit der Oberfläche der Schublade in Kontakt war, behält das PMMA seine harten, glasartigen Eigenschaften. Auf der Fügeseite innerhalb der erhitzten Zone hingegen ist das Material so weich, dass es im Verwalzschritt die einzuwalzenden Objekte vollständig umschließen kann.

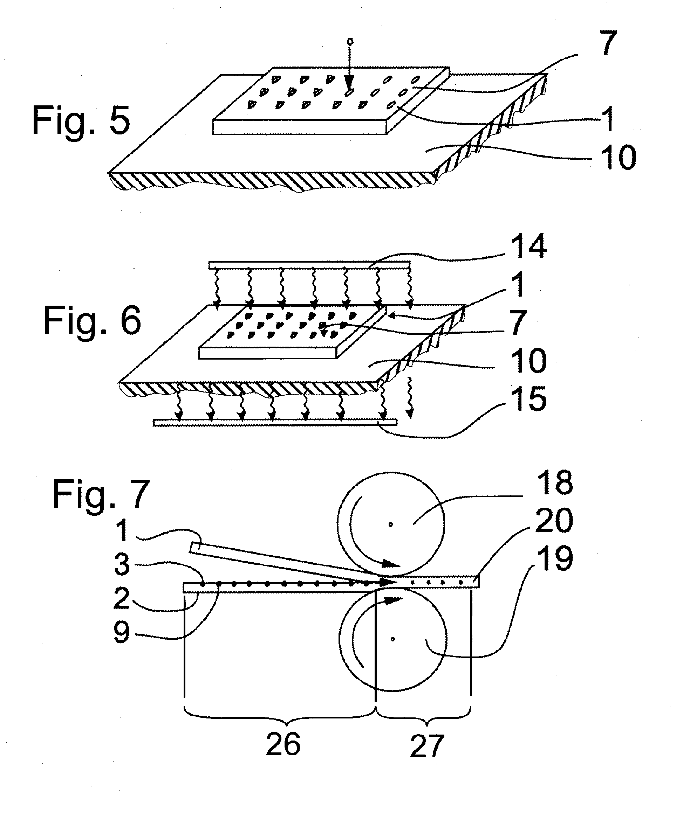

Vorteilhaft dringen die Objekte nur um 5% bis 80% der Materialstärke einer ersten und einer zweiten Kunststoffplatte vor dem Verwalzen ein. Wie erwähnt wird die Viskosität des Kunststoffes wird über die zunehmende Tiefe größer. Der Bereich der Spitze ist hinsichtlich der Durchdringung des Kunststoffes durch die Objekte weniger kritisch als in dem Bereich, in dem die Kunststoffplatten zusammengefügt werden, hier ist eine niedrigere Viskosität erwünscht, damit die Objekte umschlossen werden. Hierzu ist es auch notwendig, dass bis zuletzt ein Luftspalt nach außen vorhanden ist, der solange aufrecht erhalten bleibt, bis die Objekte von Kunststoff umschlossen ist. Hierzu sei auch auf die Figuren 6 und 7 verwiesen, in denen der Vorgang abgebildet ist.

Wie auch in der DE 44 39 419 A1 beschrieben, sollte das Walzenpaar die Kunststoffplatten während des Verwalzens nicht beschädigen. Da eine gewisse Kraft von vorzugsweise ca. 200 N bis 800N von der oberen Walze auf die Platten wirkt, dies bei einer Kunststoffplattenbreite von 100mm bis 800mm, muss sichergestellt werden, dass die Platten zum einen absolut sauber sind und zum anderen die Walzen so glatt, dass sie keine Prägung auf den PMMA Kunststoffplatten hinterlassen. Eine Möglichkeit sieht vor, hier polierte Walzen vorzusehen, deren Oberfläche makroskopisch sehr glatt ist, alternativ kann die Oberfläche der Walzen im Verhältnis zu den verwalzenden Acrylglasplatten sehr weich sein, z. B. mit einem Elastomer beschichtet sein.

Gemäß einer vorteilhaften Weiterbildung der Erfindung können vor dem Erhitzen in die Kunststoffplatten Ausnehmungen mit einer Fräse eingefräst oder einem Prägestempel oder dergleichen eingestempelt werden, um einerseits die zukünftige Position der Objekte zu definieren und andererseits die Fließstrecke, um welche der viskose Kunststoff während des Verwalzschrittes um das Objekt herum fließen muss, gering zu halten um so weiter dem Entstehen von Lufteinschlüssen entgegenwirken zu können. Unter der Fließstrecke wird hier die Strecke verstanden, welche PMMA Material zurücklegen muss, um ein Objekt zu umschließen bzw. mit dem entgegenkommenden Material der jeweiligen korrespondierenden PMMA Kunststoffplatte in Berührung zu kommen. Insbesondere in diesem Berührungsbereich, in der unmittelbaren Nähe eines Objektes, ist die Wahrscheinlichkeit, dass sich während des Verwalzens Lufteinschlüsse bilden, sehr groß. Dem kann durch das Vorsehen von Ausnehmungen vor dem Einlegen der Objekte weitestgehend entgegengewirkt werden.

Die Ausnehmungen in den Kunststoffplatten können wahlweise zuvor auf beiden Kunststoffplatten oder auf jeweils nur einer Kunststoffplatte, vorzugsweise der unteren Kunststoffplatte vorgesehen werden. Die Anordnung der Ausnehmungen innerhalb einer Ebene ist dabei beliebig. Es kann ein Muster, eine chaotische Anordnung, ein Schriftbild oder ein Symbol erstellt werden.

Gemäß einer vorteilhaften Weiterbildung der Erfindung sind die Ausnehmungen so gestaltet, dass die Objekte nur eine bestimmte Anordnung innerhalb der Ausnehmung bzw. Einfräsung einnehmen können. Strasssteine im Brilliantschliff sind mit einer polygonen, kegeligen Grundform geformt, bei dem möglichst viele winkelige Fräsflächen vorgesehen sind, so dass in den Kristall einfallendes Licht an möglichst vielen Flächen innerhalb des Kristalls reflektiert wird und so der Funkeleffekt erzeugt wird. Indem alle Strasssteine innerhalb einer Ebene die gleiche Ausrichtung aufweisen, kann ein besonders effektvolles Erscheinungsbild erstellt werden.

Durch das Vorsehen von Ausnehmungen kann darüber hinaus verhindert werden, dass das Volumen, welches die Objekte innerhalb der PMMA Kunststoffplatten einnehmen, auch tatsächlich bereitgestellt werden kann und nicht durch die Objekte verdrängt werden muss. Somit kann vermieden werden, dass durch die Objekte verdrängter Kunststoff zu Wölbungen oder Verwerfungen führt.

Weiterhin hat das Vorsehen von Ausnehmungen in zumindest einer Kunststoffplatte den Vorteil, dass an den Objekten örtlich Herde mit erhöhter Temperatur entstehen, an denen eine gegenüber der übrigen Kunststoffplatte erhöhte Temperatur herrscht. Die Objekte begünstigen die Wärmeübertragung an die Oberfläche der Ausnehmung. Genau hier muss die niedrigste Viskosität des Kunststoffes herrschen, damit die Objekte umschlossen werden können. Die Bildung der Herde mit erhöhter Temperatur gegenüber der übrigen Kunststoffplatte wird durch zwei Effekte begünstigt: zum einen kann das Objekt einen höheren Wärmeübertragungskoeffizienten als der Kunststoff haben, wovon bei der Verwendung von Kristallen als Objekt ausgegangen werden kann, zum anderen befinden sich die Objekte während des Erhitzens näher an der Wärmequelle, da sie vorteilhaft aus der Ausnehmung herausragen, so dass sie auch stärker erhitzt werden als die Oberfläche der Kunststoffplatte.

Gemäß einer vorteilhaften Weiterbildung der Erfindung kann eine Folie mit zwischen den Kunststoffplatten verwalzt werden. Die Folie kann zur Positionierung und zur optischen Unterstreichung der Objekte dienen. Hier sind verschiedene Ausführungsformen möglich: die Objekte können bezüglich der Folie in eine Kunststoffplatte hinein versetzt angeordnet sein. Dies kann realisiert werden, indem die Ausnehmung auf der entsprechenden Kunststoffplatte tief genug angefertigt wird, so dass ein gesamtes Objekt hineinpasst. Alternativ kann ein Durchdringen der Objekte durch die Folie beabsichtigt sein. Vorteilhaft handelt es sich bei der Folie um einen Kunststoff, der geeignet ist, mit dem verwalzten Kunststoffplatten durch thermisches Kleben verklebt zu werden.

Die Fügeseiten sollten möglichst frei von Verunreinigungen wie Schmutz, Staub, fetthaltigen Substanzen usw. sein. Die Verunreinigungen würden innerhalb der verwalzten Patte sichtbar. Weiterhin sollten die Fügeseiten absolut trocken sein. Restbestände an Feuchtigkeit bilden in den verwalzten Kunststoffplatten Blasen.

Gemäß einer vorteilhaften Weiterbildung der Erfindung werden die Kunststoffplatten vor dem Erhitzen getempert. Das Tempern ist ein Verfahren, mit dem in den Kunststoffplatten die Verteilung mechanischer Spannungen durch Erhitzen reduziert wird. Die Spannungen sind beim Erkalten oder bei der Polymerisation, also bei der Herstellung des Kunststoffes PMMA entstanden. Die Platten werden beim Tempern auf eine Temperatur kurz oberhalb der oberen so genannten Entspannungsgrenze gebracht. Danach werden sie langsam und stetig bis zur unteren Entspannungsgrenze abgekühlt. Gleichzeitig werden beim Tempern Rückstände von Feuchtigkeit eliminiert. Vorteilhaft werden die Kunststoffplatten noch vor der Anwendung des erfindungsgemäßen Verfahrens für 2 bis 6 Stunden auf 70°C bis 100° C erhitzt. Es ist nicht ausgeschlossen, diesen Schritt nach dem Verwalzen zu wiederholen, damit etwaige Spannungen abgebaut werden können.

Gemäß einer vorteilhaften Weiterbildung der Erfindung werden die erste und die zweite Kunststoffplatte dem Walzenpaar zueinander angewinkelt in einem Winkel von mehr als 2 Grad und höchstens 20 Grad zugeführt. Die Platten werden durch das Verwalzen infolge des Materials, welches in der unmittelbaren Nähe der Walzen auf der Zuführseite aufgestaut wird, gespreizt. Lässt man diese Spreizung kraftfrei zu, ohne die Kunststoffplatten schon vorher zusammenzudrücken, wird die Gefahr von längsgerichteten Eigenspannungen in den verwalzten Kunststoffplatten verringert.

Weitere Vorteile und Merkmale des erfindungsgemäßen Verfahrens ergeben sich aus den Unteransprüchen sowie den nachfolgend diskutierten Ausführungsbeispielen. In diesen zeigen:
- Figur 1:: Eine perspektivische Darstellung eines Ofens mit einer Kunststoffplatte auf einer Schublade, die aus dem Ofen herausragt,
- Figur 2:: die Seitenansicht eines Bereichs einer Kunststoffplatte und die erwünschte Temperaturverteilung im Querschnitt der Kunststoffplatte nach dem Erhitzen und die Viskosität eines PMMA- Kunststoffes für einen Temperaturbereich,
- Figur 3:: ein Diagramm mit dem schematischen Verlauf der Scherfestigkeit über der Temperatur für einen amorphen Thermoplasten,
- Figur 4:: in perspektivischer Darstellung die Anfertigung von Ausnehmungen in einer Kunststoffplatte mit einer Fräse,
- Figur 5:: in perspektivischer Darstellung das Einlegen von Objekten auf die Klebeseite einer Kunststoffplatte,
- Figur 6:: in perspektivischer Darstellung das Erwärmen einer Kunststoffplatte mit darauf angeordneten Objekten,
- Figur 7:: schematisch aus einer Seitenansicht das Verwalzen zweier Kunststoffplatten zwischen zwei Walzen,
- Figur 8:: schematisch den Vorgang an einem Strassstein während des Verwalzens unmittelbar bevor sich im Bereich nahe des Objektes die obere und die untere Kunststoffplatte begegnen,
- Figur 9:: schematisch ein zwischen zwei Kunststoffplatten eingeschlossenes Objekt mit einem zu einer Zuführseite weisenden Luftspalt,
- Figur 10:: ein Objekt in einem Kunststoffprodukt ohne Lufteinschlüsse, und
- Figur 11:: einen Strassstein in einem Kunststoffprodukt mit unerwünschten Lufteinschlüssen.

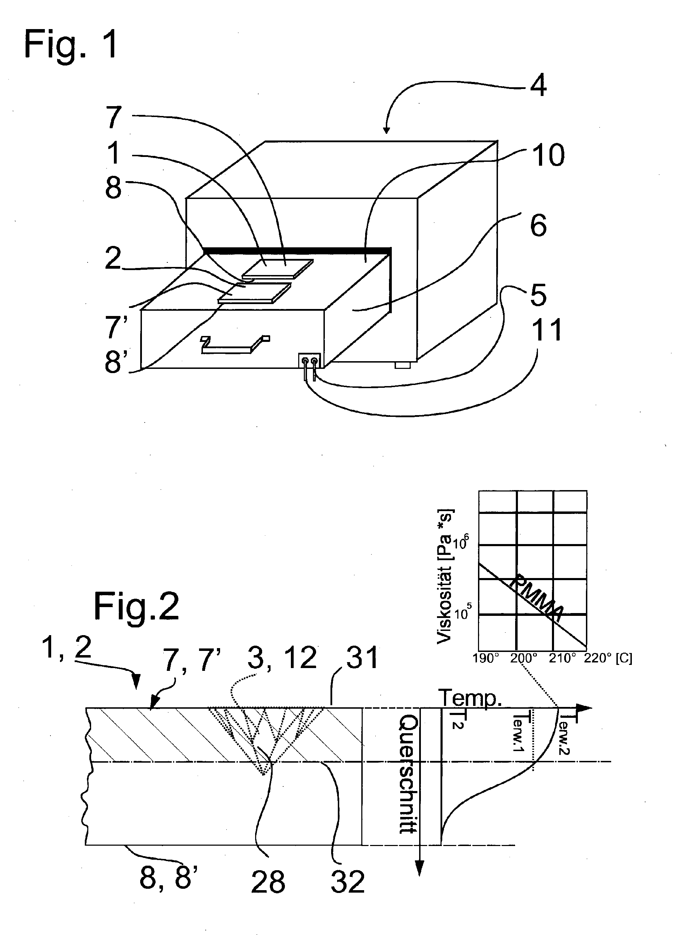

In Figur 1 ist schematisch ein Ofen 4 zum Erhitzen von Kunststoffplatten 1, 2 dargestellt. In dem Ofen 4 ist ein hier nicht dargestellter Heizkörper 14, welcher möglichst gleichmäßig Wärme auf die Kunststoffplatten 1, 2 überträgt. Die Wärmeübertragung erfolgt durch Konvektion und durch Strahlung. Damit die Kunststoffplatten 1, 2 während des Erhitzens ihre Form behalten und nicht zerfließen, werden sie an ihren Unterseiten, mit denen sie aufliegen, den späteren Walzseiten 8, 8' gekühlt. Dies erfolgt, indem eine Wärmeübertragungsflüssigkeit in der Zuleitung 5 der Schublade 6 zugeführt und in der Ablauf 11 abgeführt wird. Innerhalb der Schublade 6 sind nicht- dargestellte Wärmeübertragungsmittel, welche auch sehr einfach aufgebaut sein können, zum Beispiel indem die Schublade 6 ihrem Innern horizontal mit einer Trennplatte ausgestaltet ist. Oberhalb der Trennplatte fließt durch die Zuleitung 5 kaltes Wärmeübertragungsmedium zu, nimmt dort die von der Oberfläche 9 der Schublade ausgehende Wärme auf und wird an der Unterseite der Trennplatte dem Ablauf 11 zugeführt. Alternativ befindet sich im Inneren der Schublade 6 ein Kühler, wie von Verbrennungsmotoren bekannt.

Indem die Kunststoffplatten 1, 2 von unten gekühlt werden ist es möglich, auch dünne Kunststoffplatten 1, 2 von deutlich weniger als 20 mm von einer Seite durch Luft-Konvektionswärme und Strahlungswärme so stark zu erhitzen, dass die Kunststoffplatten 1, 2 den in Figur 2 dargestellten Temperaturverlauf innerhalb ihres Querschnittes aufweisen. Es wird nicht nur ein grenznaher Bereich erhitzt, sondern auch darunter liegende Schichten. Zumindest bis zu einer Innenschicht 32 sollte der Kunststoff auf eine Temperatur T_{erw1} erhitzt werden, bei der er eine geringere Viskosität aufweist als über einer für den Kunststoff charakteristischen Glastemperatur T_{G}. Zumindest zu 40% ihrer Höhe dringen die Objekte 3 beim späteren Verwalzen in diese Innenschicht 32 ein. Erreichbar sind Werte zwischen 200 000 Pa*s und 1000 000 Pa*s. An einer oberflächlichen, äußersten Grenzschicht 31 liegt bei einer Temperatur T_{erw2} eine geringere Viskosität zwischen 10 000 und 200 000 Pa*s vor. Unter Pa*s wird hier ein Pascal multipliziert mit einer Sekunde gemeint, was einem N*s pro m² entspricht. Für den Temperaturverlauf über den Querschnitt ist in Figur 2 weiterhin der Verlauf der Viskosität für einen PMMA Kunststoff dargestellt. Erkennbar ist die starke Abhängigkeit der Viskosität von der Temperatur, eine Erhöhung um 30K bewirkt eine mehr als zehnfach geringere Viskosität.

Wird die Temperatur T_{erw2} weiter überschritten, so können sich Dampfblasen im Kunststoff, bilden die unerwünscht sind. Gute Ergebnisse werden bei der Verwendung von PlexiglasXT® bei einer Temperatur T_{erw2} an der äußersten Grenzschicht 31 von 200°C +/- 5°C erreicht. Bei anderen Kunststoffarten kann es deutliche Abweichungen von dieser Temperatur geben. Auf der Walzseite 8, 8' herrscht vorteilhaft eine geringere Temperatur T₂, bei der der Kunststoff noch hochiviskos bzw. glasartig ist. So behalten die Kunststoffplatten 1, 2 ihre Form und können nach dem Erhitzen für den nächsten Bearbeitungsschritt zugeführt werden, ohne dass sie vollständig aufschmelzen oder an der Oberfläche 10 der Schublade 6 kleben bleiben.

Im Inneren des Ofens 4 ist im Abstand zwischen 2 cm und 20 cm, vorzugsweise im Abstand zwischen 8 und 12 cm von den Kunststoffplatten 1, 2 oberseitig ein Heizkörper 14 angeordnet. Die Übertragung der Wärme vom Heizkörper 14 auf die Kunststoffplatten 1, 2 erfolgt durch Konvektion über Umgebungsluft und über IR-Strahlung. Je geringer die Materialstärke der Kunststoffplatten 1, 2, desto schneller wird die erwünschte Temperaturverteilung erreicht. Demzufolge müssen die Kunststoffplatten 1, 2 auch nicht so lange in den Ofen 4. Kritisch ist in dieser Hinsicht die äußerste Grenzschicht 31 der Fügeseite 7, 7', weil hier die vom Heizkörper 14 ausgehende Konvektions- und Strahlungswärme am größten ist. Durch innere Konvektion und Strahlung innerhalb der Kunststoffplatte 1, 2 wird die Wärme an tiefere Bereiche abgegeben. Dies erfolgt umso schneller, je geringer die Materialstärke der Kunststoffplatten 1, 2 ist. Bei größeren Materialstärken ist zu beachten, dass die äußerste Grenzschicht 31 der Fügeseite 7, 7' nicht überhitzt wird. dennoch sollte an einer Innenschicht 32 die Temperatur T_{erw1} erreicht werden Somit ergeben sich bei größerer Materialstärke abnehmende Heizkörpertemperaturen und längere Erhitzungszeiten. Die Oberfläche 10 der Schublade 6 wird vorzugsweise mit kaltem Leitungswasser oder Wasser aus einem separaten Kühlkreislauf auf ca. 10° bis 30° C gekühlt. Dabei wurden empirisch folgende Erhitzungszeiten und Heizkörpertemperaturen in Abhängigkeit von der Materialstärke der Kunststoffplatten 1, 2 ermittelt:
Materialstärke: 6 mm; Heizkörpertemperatur: 550 °C; Erhitzungszeit: 90 sec,
Materialstärke: 8 mm; Heizkörpertemperatur: 500 °C; Erhitzungszeit: 135 sec,
Materialstärke: 10 mm; Heizkörpertemperatur: 440 °C; Erhitzungszeit: 270 sec,
Materialstärke: 12 mm; Heizkörpertemperatur: 440 °C; Erhitzungszeit: 300 sec,
Materialstärke: 15 mm; Heizkörpertemperatur: 420 °C; Erhitzungszeit: 450 sec,
Materialstärke: 20 mm; Heizkörpertemperatur: 400 °C; Erhitzungszeit: 480 sec.

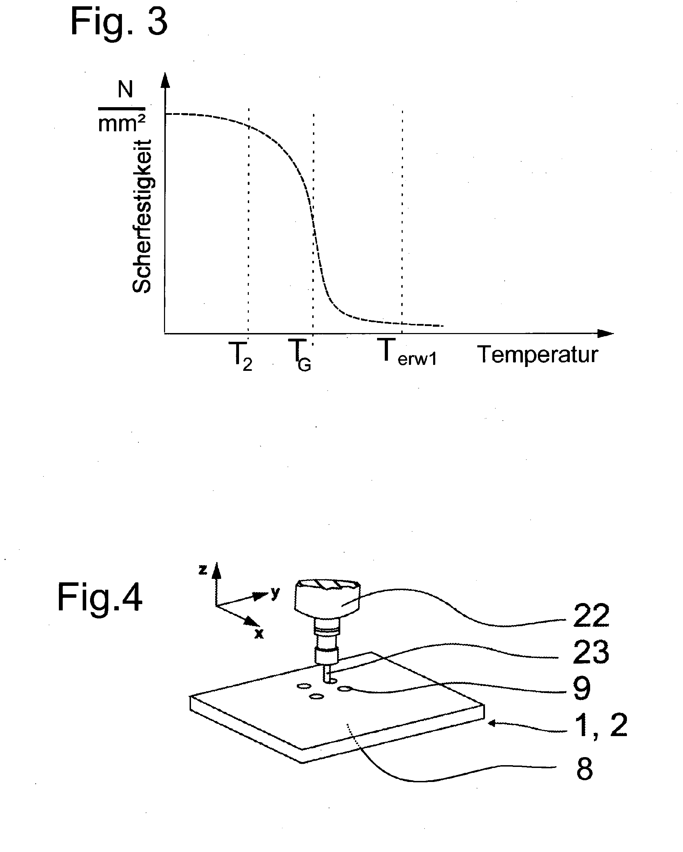

In Figur 3 ist graphisch dargestellt, wie sich bei einem amorphen Thermoplasten die Scherfestigkeit über der Temperatur ändert. Ab einer für jede Kunststoffart spezifischen Glastemperatur T_{G} erweicht der Kunststoff merklich. Diese Temperatur sollte auf der Walzseite 8, 8' der Kunststoffplatten 1, 2 nicht erreicht werden. Vielmehr sollte hier eine Temperatur T₂ herrschen, bei der der Kunststoff noch hochviskos ist und seine Scherfestigkeit hoch ist. Bei der so genannten Glastemperatur T_{G} wird die Scherfestigkeit so gering, dass ein sinnvolleres Maß für die Festigkeit des Kunststoffes die Viskosität ist.

Bei der Temperatur T_{erw1} liegt eine Viskosität zwischen 200 000 Pa*s und 1 000 000 PA*s vor. Bei der Temperatur T_{erw2} liegt eine Viskosität zwischen 10 000 Pa*s und 200 000 PA*s vor. Bei der Bemessung der Viskosität ist zu beachten, dass diese mit zunehmender Schergeschwindigkeit eines Kunststoffes abnimmt, da es sich bei aufgeschmolzenen Kunststoffen um strukturviskose Kunststoffe handelt. Die Schergeschwindigkeit ist die Änderung einer diskreten Geschwindigkeit einer Schicht relativ zu einer darunter angeordneten Schicht. Die Schergeschwindigkeit des Kunststoffes ist im erfindungsgemäßen Verfahren gering, im Bereich von 1/s bis 10/s. Selbst in diesem kleinen Bereich kann sich die Viskosität nahezu verdoppeln.

In Figur 4 ist dargestellt, wie die Ausnehmungen 9 auf den Kunststoffplatten 1, 2 angefertigt werden können. Eine Fräse 22 hat ein Fräswerkzeug 23 und kann entlang drei Achsen X, Y und Z im Raum relativ zu der Kunststoffplatte 1, 2 bewegt werden. Das Fräswerkzeug 23 ist vorteilhaft so gestaltet, dass die Fräse 22 nur einmal abgesetzt werden muss, um die gewünschte Ausnehmung 9 herzustellen. Beispielsweise kann das Fräswerkzeug 9 endseitig angespitzt sein. Alternativ wird das Fräswerkzeug 23 geführt, um eine vordefinierte Ausnehmung 9 ausfräsen zu können.

In Figur 5 ist in einer perspektivischen Darstellung das Einlegen von Objekten dargestellt. Hier sind in der ersten Kunststoffplatte 1 Ausnehmungen 9 vorhanden, das muss aber nicht so sein. Wenn die aufzulegenden Objekte im Verhältnis zu den Kunststoffplatten 1, 2 sehr klein sind, beispielsweise entlang ihrer größten äußeren Abmessung nur 1% bis 10% so groß wie eine Kunststoffplatte, ist es nicht unbedingt notwendig, Ausnehmungen vorzusehen. Davon kann jedoch im Einzelfall abgewichen werden, um eine Positionierung der Objekte 3 zu erleichtern und ein Verrutschen zu vermeiden. Das Auflegen der Objekte 3 kann mit einer Art Setzkasten erfolgen, in dem die Objekte 3 in der gewünschten Anordnung und Ausrichtung haften und manuell ausgestoßen werden können. Die Objekte 3 können jedoch auch einzeln von Hand, beispielsweise mit einer Pinzette aufgelegt werden. Dabei ist auf größtmögliche Sauberkeit zu achten, da auch Staubkörner und Fingerabdrücke nach dem Verwalzschritt sichtbar sein können.

Figur 6 verdeutlitht, wie im Ofen 4 Wärme von einem Heizkörper 14 an eine erste Kunststoffplatte 1 übertragen wird. Die zweite Kunststoffplatte 2 wird jedoch auf die gleiche Art und Weise erwärmt. Die Objekte 7 können dabei als zusätztiche Wärmeübertragungsquellen dienen, um die Wärme weiter in das Innere der Kunststoffplatte 1 zu transportieren. Unten in Figur 6 ist eine Kühlleitung 15, die der Oberfläche 10 der Schublade 6 Wärme entzieht, so dass die Kunststoffplatte 1 von Ihrer Walzseite 8 gekühlt wird.

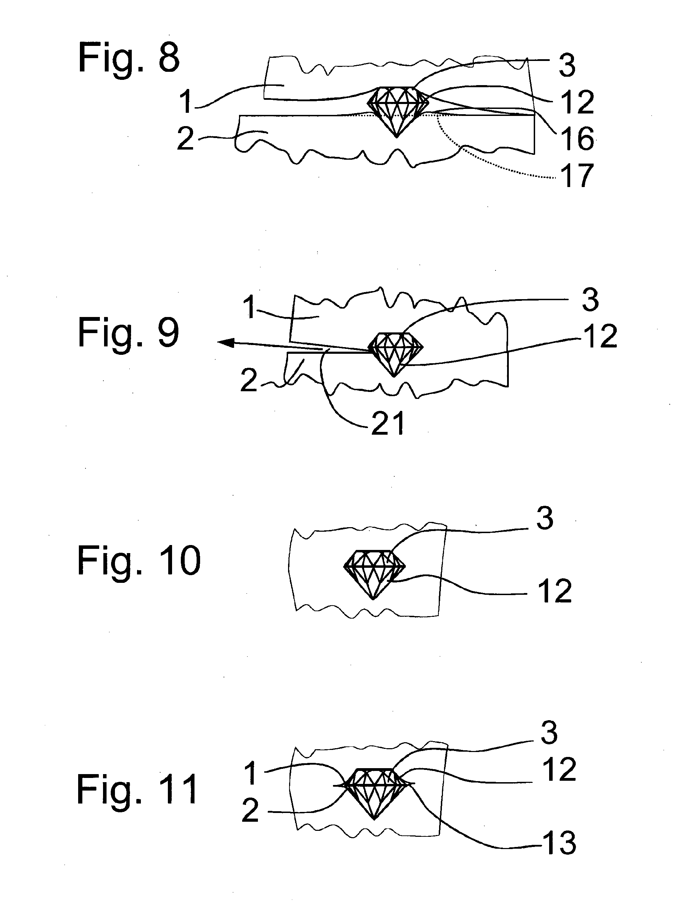

Das Verwalzen der Kunststoffplatten 1, 2 zu einem Kunststoffprodukt 20 ist in Figur 7 dargestellt. Die Übertragung der Kunststoffplatten 1, 2 vom Ofen 4 an die Walzen muss so rasch erfolgen, dass sich die erhitzte Zone 28 nicht zu stark abkühlt. An einer Zuführseite 26 werden die Kunststoffplatten 1 und 2 den Walzen zugeführt. In dem Bereich, in dem die Kunststoffplatten 1 und 2 miteinander in Berührung kommen, bewirkt das Zusammendrücken eine Auseinanderspreizung der Kunststoffplatten 1, 2. Dies ist schwer zu vermeiden aber auch förderlich für die Ausbildung eines Luftspalts, der notwendig ist, um wie in Figur 9 dargestellt, Luft aus dem sich schließenden Bereich in der unmittelbaren Nähe eines Objektes 3, hier als Strassstein 12 dargestellt, entweichen zu lassen.

Der Luftspalt muss so lange aufrecht erhalten bleiben, bis der Kunststoff das Objekt 3 bzw. den Strassstein 12 vollständig umschlossen hat. Gegebenenfalls kann der Anwender die Auseinanderspreizung der Kunststoffplatten 1 und 2 aktiv fördern, indem er sie ein wenig auseinander zieht, wenn erkannt wird, dass der die Kunststoffplatten 1 und 2 schon miteinander zu verschmelzen droht, ohne dass das Objekt 3 bzw. der Strassstein 12 umschlossen wurde. Andernfalls bilden sich Luft- bzw. Gaseinschlüsse 13, wie in Figur 11 dargestellt.

Verschmelzen die beiden Kunststoffplatten 1, 2 erst miteinander, nachdem ein Objekt 3 vollständig umschlossen wurde, wird das erfindungsgemäße Kunststoffprodukt 20 mit einem scheinbar im Material schwebenden Objekt 3 bzw. Strassstein 12 erzeugt. Die Objekte 3 sind vollständig von Kunststoff umschlossen, Lufteinschlüsse 13 sind nicht vorhanden, dies verdeutlicht Figur 10.

Die Walzen 18, 19 können starr gelagert sein und eine Oberfläche aus poliertem Metall aufweisen. Dies hat den Nachteil, dass die während des Verwalzens auf die Kunststoffplatten 1, 2 wirkende Anpresskraft nicht oder nur grob eingeschätzt werden kann. Es ist vorteilhaft, eine definierte Anpresskraft der Walzen 18, 19 einstellen zu können. Die Anpresskraft wird dabei vorteilhaft über eine nichtdargestellte Feder bereitgestellt. Die Feder kann hydraulische, mechanische oder pneumatische Wirkprinzipien und Kombinationen hieraus aufweisen. Es ist jedoch ohne weiteres möglich, die Anpresskraft über zumindest ein Gewicht bereitzustellen, wobei das Eigengewicht der oberen Walze 18 zusätzlich genutzt werden kann. Eine Schonung der Walzseite 8, 8' der Kunststoffplatten 1, 2 kann erzielt werden, indem die Walze mit einem Elastomer beschichtet ist. Etwaige Verschmutzungen können so nicht die Walzseite 8, 8' beschädigen.

Es ist zur Schonung der Walzseiten 8, 8' der Kunststoffplatten 1, 2 darüber hinaus möglich, die bei der Anlieferung vorgefertigter PMMA Kunststoffplatten übliche Schutzfolie auf den Kunststoffplatten 1, 2 zu belassen. Dies hat jedoch die Nachteile, dass während des Erhitzens im Ofen 4 die Kunststoffplatten 1, 2 von der Oberfläche 10 der Schublade 6 isoliert werden und die Wärmeübertragung durch die Folie beeinträchtigt wird. Dadurch kann weniger Wärme aus den Kunststoffplatten 1, 2 abgeleitet werden, wodurch die Gefahr eines Überhitzens besteht. Zusätzlich dazu ist es möglich, dass sich unsauber abgetrennte Folienrückstände, welche über die Grundfläche einer Kunststoffplatte 1, 2 in das Innere des Ofens 4 ragen, verbrennen.

Weitere Vorteile der Erfindung ergeben sich aus den Ansprüchen. Darin bleiben beliebige Kombinationen der Ansprüche untereinander vorbehalten.

## Patentansprüche

1. Verfahren zum Verwalzen und Verbinden zumindest zweier Kunststoffplatten (1, 2), die jeweils eine Fügeseite (7, 7') und eine Walzseite (8, 8') aufweisen, an ihren Fügeseiten (7, 7'), mit den Verfahrensschritten:
a) Auflegen von Objekten (3), bei denen das Verhältnis der Höhe zu deren Breite und/oder Länge größer als 30% ist, wobei die Höhe der Objekte an einer zur Fügeseite (7, 7') der Kunststoffplatten orthogonalen Achse gemessen ist, auf die Fügeseite (7, 7') einer Kunststoffplatte (1, 2),
b) separates Erhitzen zweier Kunststoffplatten (1, 2) auf der Fügeseite (7, 7'), wobei
- an einer oberflächlichen äußersten Grenzschicht (31) eine Temperatur T_{erw2} erreicht wird, bei der die Viskosität des Kunststoffes zwischen 10 000 Pa*s und 200 000 Pa*s liegt,
- und in einer Innenschicht (32), welche in einer Tiefe der Kunststoffplatten (1, 2) liegt, die zu 40% der Höhe der Objekte (3) entspricht, eine Temperatur T_{erw1} erreicht wird, bei der die Viskosität des Kunststoffes zwischen 200 000 Pa*s und 1000 000 Pa*s liegt,
wobei die Walzseiten (8, 8') auf einer Temperatur T₂ gehalten werden, die mindestens 10K unterhalb T_{erw1} liegt,
c) Verwalzen der zwei Kunststoffplatten (1, 2) zwischen zwei Walzen (19, 20), wobei die KunststofFplatten (1, 2) einander mit ihren Fügeseiten (1, 2) zugewandt angeordnet sind und wobei die Kunststoffplatten (1, 2) so angewinkelt zugeführt werden, dass so lange ein Spalt zwischen den Objekten (3) und der offenen Seite einer Zuführseite (26) erhalten bleibt, bis die Objekte (3) von Kunststoff umschlossen sind.

2. Verfahren nach Anspruch 1, **dadurch gekennzeichnet, dass** an zumindest einer Kunststoffplatte (1 oder 2) an der Fügeseite (7 oder 7') vor Schritt a) Ausnehmungen (9) zur Aufnahme der Objekte (3) vorgesehen sind, welche in dem fertigen Kunststoffprodukt (20) nicht mehr erkennbar sind.

3. Verfahren nach den Anspruch 2, **dadurch gekennzeichnet, dass** die Ausnehmungen (9) an beiden Fügeseiten (7, 7') angeordnet sind.

4. Verfahren nach den Ansprüchen 2 oder 3, **dadurch gekennzeichnet, dass** die Ausnehmungen (9) orthogonal bezüglich der Ebene, welche die einander zugewandten Fügeseiten (7, 7') bilden, eine unterschiedliche Tiefe aufweisen so dass in dem fertigen Kunststoffprodukt die Objekte (3) bezüglich der Ebene versetzt angeordnet sind.

5. Verfahren nach einem der Ansprüche 2 bis 4, **dadurch gekennzeichnet, dass** die Ausnehmungen (9) an den beiden Kunststoffplatte (1, 2) vorgesehen werden, wobei die Ausnehmungen (9) zueinander korrespondieren.

6. Verfahren nach den Ansprüchen 2 bis 5, **dadurch gekennzeichnet, dass** das gemeinsame Volumen mindestens einer Ausnehmungen (9) mindestens 10% des Volumens entsprechen, welches ein Objekt (3) einnimmt.

7. Verfahren nach einem Ansprüche 1 bis 6, **dadurch gekennzeichnet, dass** die Objekte (3) am Ende von Schritt b) die Temperatur der Objekte (3) mindestens 10K höher als diejenige der erhitzen Zone (28) ist.

8. Verfahren nach Anspruch 1, **dadurch gekennzeichnet, dass** die erste und die zweite Kunststoffplatte (1, 2) dem Watzenpaar (18, 19) zueinander angewinkelt in einem Winkel von mehr als 2 Grad und weniger als 20° zugeführt werden.

9. Verfahren nach Anspruch 1, **dadurch gekennzeichnet, dass** die Walzseite (8, 8') zusätzlich mit einem Wärmeübertragungsmittel gekühlt wird.

10. Verfahren nach Anspruch 1, **dadurch gekennzeichnet, dass** die Kunststoffplatten (1, 2) vor dem Verfahrensschritt des Erhitzens getempert, insbesondere für 2 Stunden bis 6 Stunden auf 70° C bis 100° C erhitzt werden.

11. Verfahren nach Anspruch 1, **dadurch gekennzeichnet, dass** zwischen den Kunststoffplatten (1, 2) weiterhin eine Folie angeordnet wird, insbesondere, dass auf dieser Folie Objekte (3) angeordnet sind.

## Claims

1. A method for rolling together and connecting at least two plastic plates (1, 2), which respectively feature a joining side (7, 7') and a rolling side (8, 8'), on their joining sides (7, 7'), comprising the steps of:
a) placing objects (3) onto the joining side (7, 7') of a plastic plate (1, 2), wherein the ratio of the height of the objects to their width and/or length is greater than 30 %, and wherein the height of the objects is measured on an axis extending orthogonal to the joining side (7, 7') of the plastic plates,
b) separately heating two plastic plates (1, 2) on their joining side (7, 7'), wherein
- a temperature T_{erw2}, at which the viscosity of the plastic lies between 10,000 Pa*s and 200,000 Pa*s, is reached on an outermost surface boundary layer (31),
- and a temperature T_{erw1}, at which the viscosity of the plastic lies between 200,000 Pa*s and 1,000,000 Pa*s, is reached in an internal layer (32) that lies at a depth of the plastic plates (1, 2) corresponding to 40 % of the height of the objects (3), and
wherein the rolling sides (8, 8') are maintained at a temperature T₂ that lies at least 10K below T_{erw1},
c) rolling together the two plastic plates (1, 2) between two rollers (19, 20), wherein the plastic plates (1, 2) are arranged such that their joining sides (7, 7') face one another, and wherein the plastic plates (1, 2) are fed to the rollers in such an angled fashion that a gap remains between the objects (3) and the open side of a feed side (26) until the objects (3) are enclosed by plastic.

2. The method according to claim 1, **characterized in that** recesses (9) for accommodating the objects (3) are provided on the joining side (7 or 7') of at least one plastic plate (1 or 2) prior to step a), wherein said recesses are no longer visible in the finished plastic product (20).

3. The method according to claim 2, **characterized in that** the recesses (9) are arranged on both joining sides (7, 7').

4. The method according to claims 2 or 3, **characterized in that** the recesses (9) have a different depth measured orthogonal to the plane formed by the facing joining sides (7, 7') such that the objects (3) are arranged offset referred to the plane in the finished plastic product.

5. The method according to one of claims 2 to 4, **characterized in that** the recesses (9) are provided on both plastic plates (1, 2), wherein the recesses (9) correspond to one another.

6. The method according to claims 2 to 5, **characterized in that** the combined volume of at least one recess (9) corresponds to at least 10 % of the volume occupied by an object (3).

7. The method according to one of claims 1 to 6, **characterized in that** the temperature of the objects (3) at the end of step b) is at least 10K higher than that of the heated zone (28).

8. The method according to claim 1, **characterized in that** the first and the second plastic plate (1, 2) are fed to the pair of rollers (18, 19) such that they are angled relative to one another by an angle of more than 2 degrees and less than 20°.

9. The method according to claim 1, **characterized in that** the rolling side (8, 8') is additionally cooled with a heat transfer medium.

10. The method according to claim 1, **characterized in that** the plastic plates (1, 2) are tempered, particularly heated to between 70 °C and 100 °C for 2 hours to 6 hours, prior to the heating step.

11. The method according to claim 1, **characterized in that** a film is furthermore arranged between the plastic plates (1, 2) and, in particular, objects (3) are arranged on this film.

## Revendications

1. Procédé de déformation au rouleau et de raccordement d'au moins deux plaques en plastique (1, 2) qui présentent chacune un côté de raccordement (7, 7') et un côté de rouleau (8, 8'), par leurs côtés de raccordement (7, 7'), comprenant les étapes de procédé :
a) de placement d'objets (3) dans lesquels le rapport de la hauteur à leur largeur et/ou longueur est supérieur à 30 %, sachant que la hauteur des objets est mesurée sur un axe orthogonal au côté de raccordement (7, 7') des plaques en plastique, sur le côté de raccordement (7, 7') d'une plaque en plastique (1, 2),
b) de chauffage séparé de deux plaques en plastique (1, 2) sur le côté de raccordement (7, 7'), sachant que
- sur une couche limite extérieure surfacique (31), une température T_{erw2} est atteinte à laquelle la viscosité du plastique est située entre 10 000 Pa*s et 200 000 Pa*s,
- et dans une couche intérieure (32), laquelle repose dans une profondeur des plaques en plastique (1, 2) qui correspond à 40 % de la hauteur de l'objet (3), une température T_{erw1} est atteinte à laquelle la viscosité du plastique est située entre 200 000 Pa*s et 1 000 000 Pa*s,
sachant que les côtés de rouleau (8, 8') sont maintenus à une température T₂ qui est au moins de 10K en-dessous de T_{erw1,}
c) de déformation au rouleau des deux plaques en plastique (1, 2) entre deux rouleaux (19, 20), sachant que les plaques en plastique (1, 2) sont disposées tournées l'une vers l'autre par leurs côtés de raccordement (7, 7') et sachant que les plaques en plastique (1, 2) sont ainsi conçues pliées qu'une fente est maintenue entre les objets (3) et le côté ouvert d'un côté d'amenée (26) jusqu'à qu'à ce que les objets (3) soient entourés par le plastique.

2. Procédé selon la revendication 1, **caractérisé en ce que** sur au moins une plaque en plastique (1 ou 2) sur le côté de raccordement (7 ou 7') avant l'étape a), des évidements (9) sont prévus pour recevoir des objets (3), lesquels ne sont plus reconnaissables dans le produit en plastique fini (20).

3. Procédé selon la revendication 2, **caractérisé en ce que** les évidements (9) sont disposés sur les deux côtés de raccordement (7 ou 7').

4. Procédé selon la revendication 2 ou 3, **caractérisé en ce que** les évidements (9) présentent une profondeur différente de façon orthogonale au plan qui forme les côtés de raccordement (7, 7') tournés l'un vers l'autre, de sorte que dans le produit en plastique fini, les objets (3) sont disposés décalés par rapport au plan.

5. Procédé selon l'une des revendications 2 à 4, **caractérisé en ce que** les évidements (9) sont prévus sur les deux plaques en plastique (1, 2), sachant que les évidements (9) correspondent entre eux.

6. Procédé selon l'une des revendications 2 à 5, **caractérisé en ce que** le volume commun d'au moins un évidement (9) correspond à au moins 10 % du volume qu'un objet (3) occupe.

7. Procédé selon l'une des revendications 1 à 6, **caractérisé en ce qu'**à la fin de l'étape b), la température des objets (3) est au moins de 10K supérieure à celle de la zone chauffée (28).

8. Procédé selon la revendication 1, **caractérisé en ce que** les première et seconde plaques en plastique (1, 2) sont amenées vers la paire de rouleaux (18, 19) en étant pliées l'une par rapport à l'autre dans un angle supérieur à 2 degrés et inférieur à 20°.

9. Procédé selon la revendication 1, **caractérisé en ce que** le côté de rouleau (8, 8') est en plus refroidi avec un moyen de transfert de chaleur.

10. Procédé selon la revendication 1, **caractérisé en ce que** les plaques en plastique (1, 2) sont durcies par trempe avant l'étape de procédé de chauffage, en particulier sont chauffées de 70 °C à 100 °C pendant 2 heures à 6 heures.

11. Procédé selon la revendication 1, **caractérisé en ce qu'**un film est en plus disposé entre les plaques en plastique (1, 2), en particulier, que des objets (3) sont disposés sur ce film.
